# EUROPÄISCHE PATENTSCHRIFT

(11) **EP 1 871 590 B1**
(45) Veröffentlichungstag und Bekanntmachung des Hinweises auf die Patenterteilung: **18.11.2015**
(21) Anmeldenummer: 06722741.3
(22) Anmeldetag: 30.03.2006
(51) Int. Cl.: B29C 49/56, B29C 49/06, B29C 49/12, B29K 23/00, B29K 67/00

(54) **FORMWERKZEUGSCHLIESSVERFAHREN UND VORRICHTUNG ZUR BLASFORMUNG VON BEHÄLTERN**
METHOD AND DEVICE FOR BLOW-MOULDING CONTAINERS
PROCEDE ET DISPOSITIF POUR MOULER DES RECIPIENTS PAR SOUFFLAGE

(30) Priorität: 16.04.2005 DE 102005017540
(43) Veröffentlichungstag der Anmeldung: 02.01.2008
(73) Patentinhaber: KHS Corpoplast GmbH, 22145 Hamburg (DE)
(72) Erfinder: LITZENBERG, Michael, 21502 Geesthacht (DE); BAUMGARTE, Rolf, 21502 Geesthacht (DE); LINKE, Michael, 22047 Hamburg (DE)
(74) Vertreter: Hausfeld, Norbert
(86) Internationale Anmeldenummer: PCT/DE2006/000591
(87) Internationale Veröffentlichungsnummer: WO 2006/111127

(56) Entgegenhaltungen:
- WO-A-99/62692
- WO-A-03/106141
- WO-A2-2006/056437

## Beschreibung

Die Erfindung betrifft ein Verfahren zur Blasformung von Behältern, bei dem spritzgegossene Vorformlinge aus einem thermoplastischen Material im Bereich einer Heizstrecke erwärmt und anschließend an eine Blaseinrichtung übergeben werden, in der die Vorformlinge durch Einwirkung eines Blasdruckes innerhalb von Blasformen, die aus mindestens zwei Blasformsegmenten bestehen, zu den Behältern umgeformt werden und bei dem die Vorformlinge gemeinsam mit den Blasformen mindestens entlang eines Teiles eines Umlaufweges eines rotierenden Blasrades transportiert werden sowie bei dem die Blasformsegmente während mindestens eines Teiles des Blasformungsprozesses relativ zueinander verspannt werden und bei dem mindestens eines der Blasformsegmente um eine Drehachse herum zur Durchführung von Öffnungs- und Schließbewegungen verschwenkt wird, sowie bei dem mindestens eines der Blasformsegmente nach einem Schließen einer die Blasformsegmente halternden Blasstation beabstandet zur Drehachse und unabhängig vom anderen Blasformsegment gegenüber einem fest mit dem Blasrad verbundenen Gegenlager abgestützt und mindestens zeitweise sowohl gegenüber dem Gegenlager als auch gegenüber dem anderen Blasformsegment verspannt wird.

Die Erfindung betrifft darüber hinaus eine Vorrichtung zur Blasformung von Behältern, die eine Heizstrecke zur Erwärmung von spritzgegossenen Vorformlingen aus einem thermoplastischen Material aufweist und die mit einer Blaseinrichtung versehen ist, die mindestens eine auf einem Blasrad angeordnete Blasstation zur Umformung der Vorformlinge in die Behälter aufweist, sowie bei der die Blasstation mit Formträgern versehen ist, die jeweils Blasformsegmente haltern und bei der ein erster Formträger relativ zu einem zweiten Formträger um eine Drehachse herum beweglich angeordnet ist, und bei der mindestens einer der Formträger in einer geschlossenen Positionierung der Blasstation unabhängig vom anderen Formträger und mit einem Abstand zu einer Drehachse der Blasstation gegenüber einem fest mit dem Blasrad verbundenen Gegenlager abgestützt angeordnet ist und der gegenüber dem Gegenlager abgestützte Formträger mindestens zeitweise sowohl gegenüber dem Gegenlager als auch gegenüber dem weiteren Formträger verspannbar positioniert ist.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Ständig zunehmende Anforderungen an die Leistungsfähigkeit der Blasmaschinen führen dazu, daß Blasräder mit einer relativ großen Anzahl von Blasstationen verwendet werden und daß die Blasräder relativ schnell rotieren. Die große Anzahl der Blasstationen führt zu einem großen Durchmesser der Blasräder und die hohen Drehzahlen führen zu starken Brems- und Beschleunigungskräften aufgrund der kinetischen Energie der bewegten Massen.

Zur Verringerung dieser nachteiligen Effekte ist bereits vorgeschlagen worden, die Blasräder mit einer kompakten Anordnung von Blasstationen zu konstruieren. Eine Vielzahl von Konstruktionsvarianten sind in der DE-OS 199 48 474 beschrieben. Bislang konnte allerdings noch keine Konstruktion gefunden werden, die eine verbesserte Kompaktheit des Blasrades bei gleichzeitig einfacher mechanischer Grundkonstruktion ermöglicht. Aus der wo 99/62692 A ist es bereits bekannt, ein Blasrad mit einer vertikal angeordneten Drehachse mit Blasstationen zu versehen. Die Blasstationen besitzen jeweils eine relativ zum Blasrad unbeweglich angeordnete Formhälfte sowie eine in radialer Richtung nach außen verschwenkbare Formhälfte. Eine Drehachse der verschwenkbaren Formhälfte verläuft in einer horizontalen Richtung.

In der WO 03/106141 A wird eine trommelartige Blaseinrichtung zur Durchführung eines Extrusionsblasens beschrieben. Ein extrudierter Schlauch wird hierbei in die Blasstation eingesetzt. Eine der Blasformhälften ist relativ zur Blastrommel unbeweglich angeordnet und die zweite Blasformhälfte ist um eine horizontale Drehachse herum verschwenkbar positioniert.

Aufgabe der vorliegenden Erfindung ist es, ein Verfahren der einleitend genannten Art derart zu verbessern, daß eine Optimierung der kinematischen Abläufe der Blasmaschine unterstützt wird, insbesondere bei der Durchführung einer Eingabe der Vorformlinge sowie einer Entnahme der Behälter.

Diese Aufgabe wird erfindungsgemäß dadurch gelöst, daß mindestens ein Blasformsegment um eine vertikale Drehachse verschwenkt wird und daß die Blasformsegmente in einer geschlossenen Positionierung der Blasstation mit einer Trennebene schräg zu einer radialen Bezugsebene des Blasrades angeordnet werden.

Weitere Aufgabe der vorliegenden Erfindung ist es, eine Vorrichtung der einleitend genannten Art derart zu konstruieren, daß ein kompakter und preiswerter Aufbau des Blasrades bei verbesserter Verteilung der rotierenden Massen bereitgestellt wird und das eine einfachere Kinematik bei der Durchführung einer Eingabe der Vorformlinge sowie einer Entnahme der Behälter unterstützt wird.

Diese Aufgabe wird erfindungsgemäß dadurch gelöst, daß die Blasstation mit einer Trennebene der Blasformsegmente derart angeordnet ist, daß die Trennebene schräg zu einer radialen Bezugsebene des Blasrades positioniert ist und daß die Drehachse im wesentlichen vertikal angeordnet ist.

Gemäß einer besonderen unabhängigen Erfindungsvariante ist auch daran gedacht, daß der zweite Formträger unbeweglich mit dem Blasrad verbunden ist .

Durch die Abstützung des einen Formträgers bzw. des einen Blasformsegmentes unabhängig vom anderen Blasformsegment gegenüber einem fest mit dem Blasrad verbundenen Gegenlager ist es möglich, auf eine klassische Verriegelung der Blasstation zu verzichten, bei der ein geschlossener Kraftverlauf innerhalb der Blasstation bereitgestellt wird.

Bei einer Blasverformung der Vorformlinge in die Behälter treten innerhalb der Blasstation aufgrund des einwirkenden Druckes erhebliche Kräfte auf, die die typischerweise relativ zueinander verschwenkbar angeordnete Blasformsegmente auseinanderdrücken. Zur Vermeidung dieses Auseinanderdrückens erfolgt gemäß einem klassischen Aufbau der Blasstationen die Kraftaufnahme auf einer Seite im Bereich des Schwenklagers und auf einer gegenüberliegenden Seite im Bereich der Verriegelung. Die Formträger müssen hierzu eine relativ stabile Konstruktion aufweisen, um die auftretenden Kräfte aufzunehmen, darüber hinaus verursacht die erforderliche Verriegelung einen entsprechenden wirtschaftlichen Aufwand und die Verriegelungselemente liegen auf dem rotierenden Blasrad sehr weit außen, so daß die mechanische Trägheit des Blasrades durch die entsprechende Masseverteilung ungünstig beeinflußt wird.

Erfingdungsgemäß wurde erkannt, daß eine Abstützung mindestens eines der Formträger bzw. mindestens eines der Blasformsegmente gegenüber einem fest mit dem Blasrad verbundenen Gegenlager in Kombination mit einer Verspannbarkeit völlig ausreichend ist, um eine ungewollte teilweise Öffnung der Blasstation durch den einwirkenden Blasdruck zu vermeiden. Die Abstützung und Verspannbarkeit der Formträger bzw. des Blasformsegmentes unabhängig vom anderen Formträger der Blasstation bzw. vom anderen Blasformsegment führt zu weiteren erheblichen Vorteilen hinsichtlich der benötigten mechanischen Stabilität sowie der Masse der verwendeten Bauteile.

Eine beispielsweise in der EP-PS 1 216 136 sowie der DE-PS 100 27 111 beschriebene gemeinsame Abstützung der Formträger bzw. der Blasformsegmente über gemeinsame gabelartige äußere Rahmenteile ist durch die erfindungsgemäß vorgeschlagene Abstützung und verspannbarkeit entbehrlich. Gegenüber diesen Konstruktionen gemäß dem Stand der Technik kann deshalb eine erheblich dichtere Anordnung der Blasstationen nebeneinander sowie ein deutlich vermindertes Baugewicht erreicht werden. Es werden erfindungsgemäß die gemäß dem Stand der Technik zur Kraftübertragung verwendeten und von starken Biegekräften belasteten Bauteile vermieden und durch eine direkte Krafteinleitung in das fest mit dem Blasrad verbundene Gegenlager ersetzt.

Eine einfache Steuerbarkeit wird dadurch unterstützt, daß die Verspannung der Blasformsegmente relativ zueinander durch eine pneumatische Verspannung bereitgestellt wird.

Insbesondere erweist es sich bei einer Materialhandhabung als vorteilhaft, daß der fest mit dem Blasrad verbundene Formträger schräg zur radialen Bezugsebene angeordnet ist.

Typischerweise ist daran gedacht, daß ein Neigungswinkel zwischen der Trennebene und der radialen Bezugsebene ein Wertintervall zwischen 0 Grad und 45 Grad, bevorzugt zwischen 1 Grad und 20 Grad, aufweist.

Eine bevorzugte Ausführungsform wird dadurch bereitgestellt, daß die Drehachse im wesentlichen vertikal angeordnet ist.

Eine günstige Materialverteilung auf dem Blasrad kann dadurch erreicht werden, daß eine Abstützeinrichtung zur Abstützung des beweglichen Formträgers gegenüber dem Gegenlager als Teil eines Gelenkhebels ausgebildet ist.

Eine mechanisch sehr einfache Konstruktion wird dadurch erreicht, daß eine Abstützeinrichtung zur Abstützung des beweglichen Formträger gegenüber dem Gegenlager keilförmig ausgebildet ist.

Erhöhte konstruktive Freiheitsgrade können dadurch erschlossen werden, daß das Gegenlager als ein eigenständiges Bauelement ausgebildet ist.

Zu einem kompakten Aufbau trägt es bei, daß das Gegenlager als Teil einer zur abzustützenden Blasstation benachbarten Blasstation ausgebildet ist.

Ein einfacher Materialumlauf wird auch dadurch unterstützt, daß die Blasstation zur Aufnahme von mit ihren Mündungsabschnitten in lotrechter Richtung nach oben orientierten Vorformlingen ausgebildet ist.

Darüber hinaus ist es aber auch möglich, daß die Blasstation zur Aufnahme von mit ihren Mündungsabschnitten in lotrechter Richtung nach unten orientierten Vorformlingen ausgebildet ist.

Eine hohe Modularität des Gesamtaufbaus kann dadurch erreicht werden, daß entlang eines Außenumfanges des Blasrades abwechselnd fest mit dem Blasrad verbundene Formträger sowie relativ zum Blasrad beweglich angeordnete Formträger positioniert sind.

Eine nochmals vergrößerte Kompaktheit wird dadurch erreicht, daß entlang des Außenumfanges des Blasrades jeweils paarweise fest mit dem Blasrad verbundene Formträger sowie verschwenkbar relativ zum Blasrad geführte Formträger einander benachbarter Blasstationen angeordnet sind.

Eine besonders enge Anordnung der Blasstationen entlang des Außenumfanges des Blasrades ist dadurch möglich, daß mindestens zwei benachbarte Blasstationen einen gemeinsamen fest mit dem Blasrad verbundenen Formträger aufweisen.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine teilweise Draufsicht auf ein Blasrad mit mehreren nebeneinander angeordneten Blasstationen in einem vollständig geöffneten Zustand,
- Fig. 6: die Anordnung gemäß Fig. 5 nach einem teilweisen Schließen der Blasstationen,
- Fig. 7: die Anordnung gemäß Fig. 5 und Fig. 6 nach einem vollständigen Schließen der Blasstationen,

- Fig. 8: eine perspektivische Seitenansicht der Anordnung gemäß Fig. 5,
- Fig. 9: eine perspektivische Seitenansicht der Anordnung gemäß Fig. 7,
- Fig. 10: eine perspektivische Seitenansicht einer weiteren Ausführungsform, bei der jeweils ein verschwenkbarer Formträger sowohl mit einem feststehenden Formträger der eigenen als auch einer benachbarten Blasstation verbunden ist und
- Fig. 11: eine Darstellung der Anordnung gemäß Fig. 10 nach einem teilweise Schließen der Blasstation.

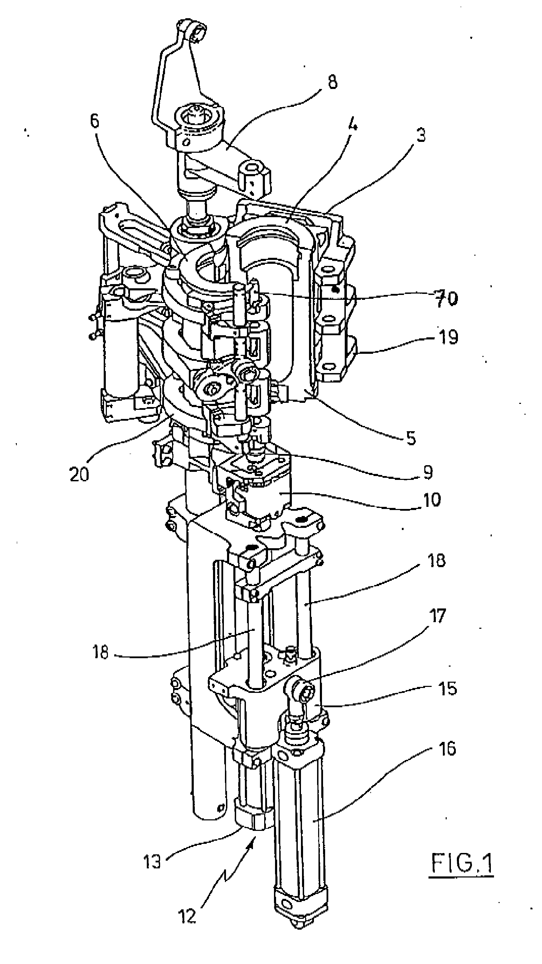

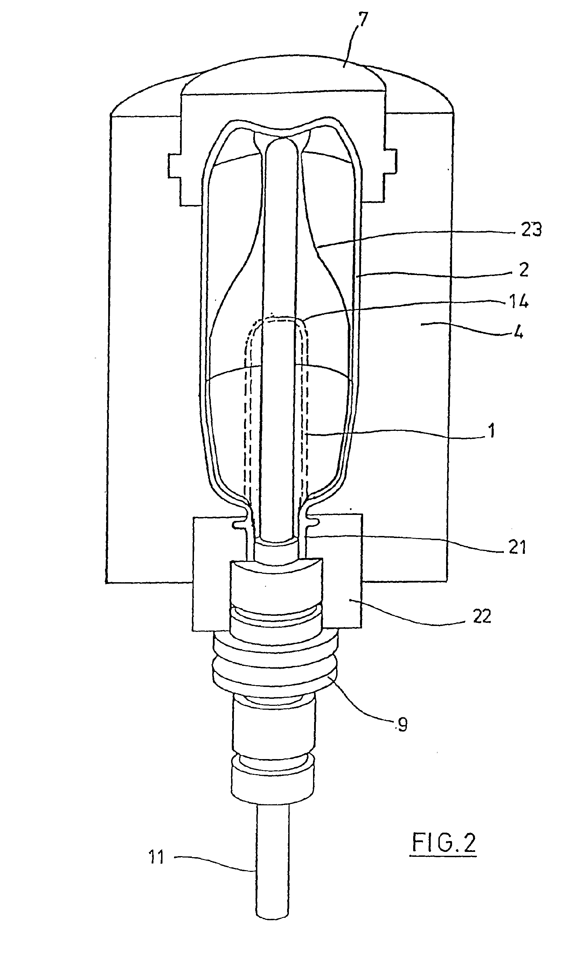

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (70).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

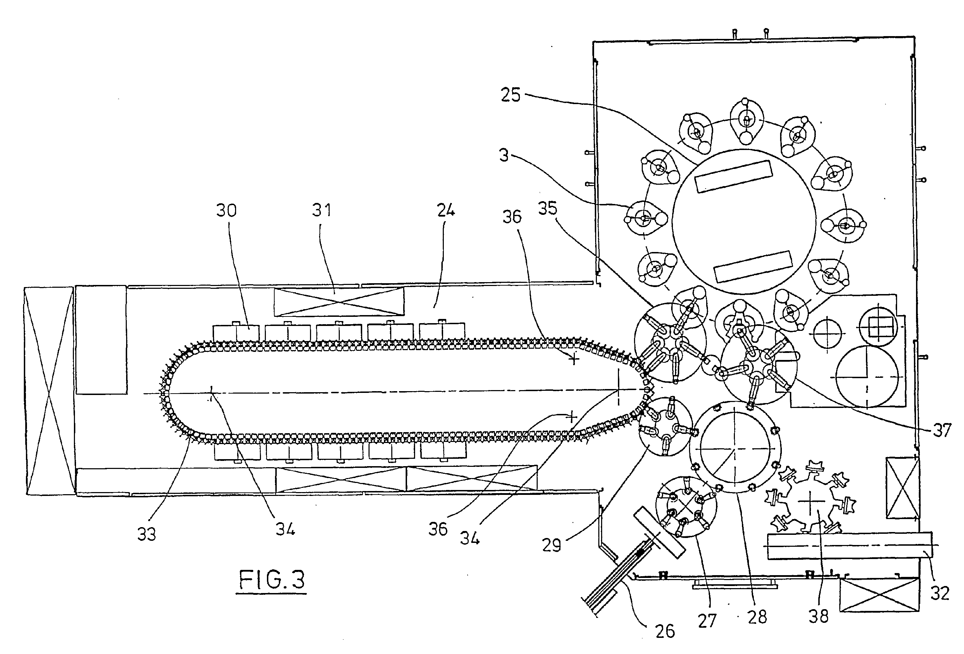

Fig. 3 zeigt den grundsätzlichen Aufbau einer Blasmaschine, die mit einer Heizstrecke (24) sowie einem rotierenden Blasrad (25) versehen ist. Ausgehend von einer vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Haupt-blasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

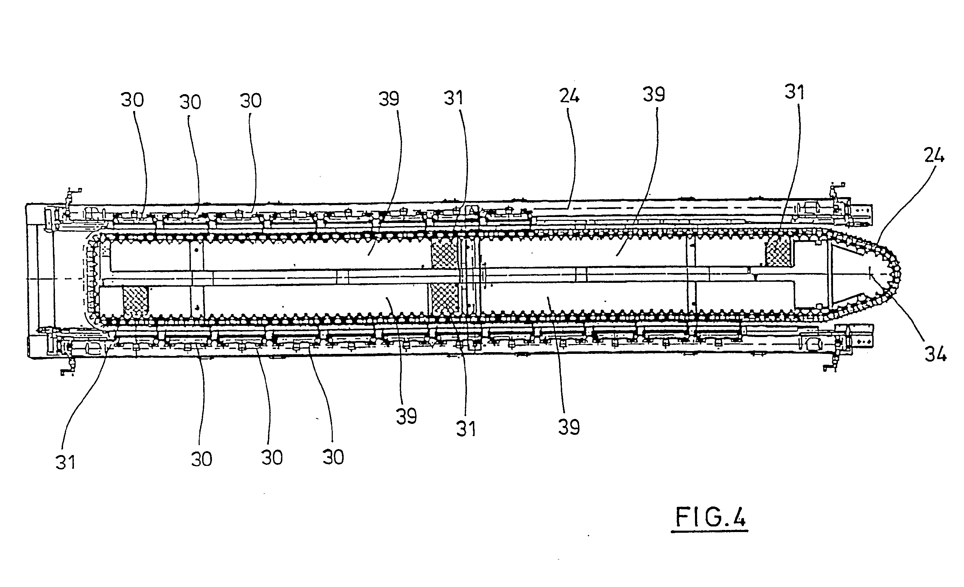

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

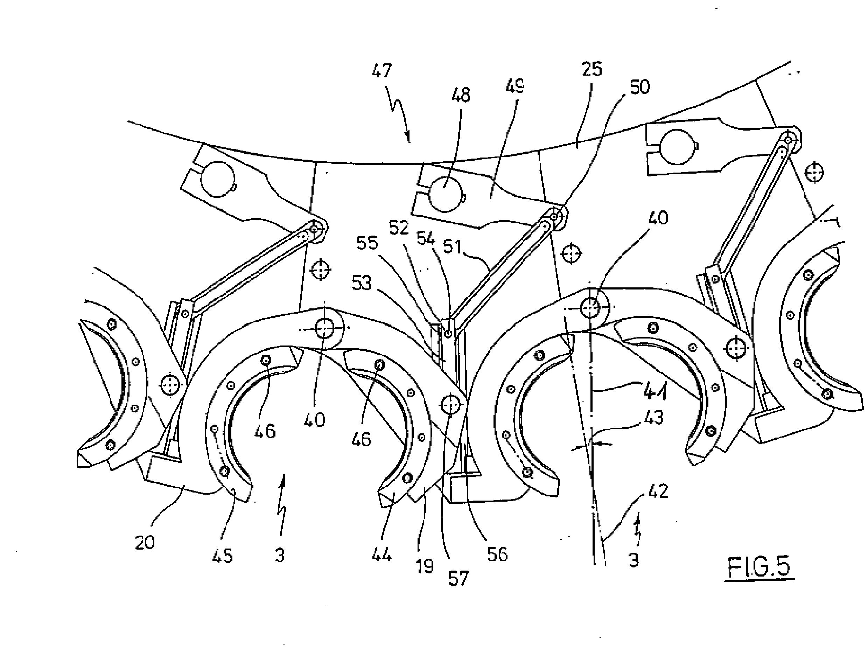

Gemäß der Ausführungsform in Fig. 5 sind entlang eines Umfanges des Blasrades (25) eine Mehrzahl von Blasstationen (3) angeordnet. Die Formträger (5) sind relativ zu einer Drehachse (40) verschwenkbar angeordnet und die Formträger (6) sind starr mit dem Blasrad (25) verbunden. Eine Trennebene (41) der Blasstation (3) ist relativ zu einer radialen Bezugsebene (42) des Blasrades (25) um einen Neigungswinkel (43) schräg gestellt.

Gemäß der Ausbildung in Fig. 5 bestehen die Blasformen aus äußeren Formschalen (44, 45) sowie in Fig. 5 nicht dargestellten inneren Formschalen, die mit der Kontur des herzustellenden Behälters (2) versehen sind. Die äußeren Formschalen (44, 45) weisen Temperiermittelkanäle (46) auf, um die Blasform (4) anwendungsabhängig zu beheizen oder zu kühlen.

Gemäß dem in Fig. 5 dargestellten Betriebszustand der Blasstation (3) mit einer maximalen Öffnung grenzen die Formträger (5) der einen Blasstation (3) gegen die Formträger (6) der benachbarten Blasstation (3) bzw. sind mit einem geringen Abstand zum jeweils benachbarten Formträger angeordnet. Zur Durchführung einer Positionierbewegung der verschwenkbaren Formträger (19) wird eine Positioniereinrichtung (47) verwendet, die vorzugsweise kurvengesteuert betätigbar ist. Eine in Fig. 5 nicht dargestellte Kurvensteuerung ist hierbei über eine Steuerwelle (48) mit einem Anlenkhebel (49) verbunden, der über ein Schwenkgelenkt (50) mit einem Steuerhebel (51) gekoppelt ist. Der Steuerhebel (51) ist über ein Schwenkgelenk (52) mit einem Stützhebel (53) gekoppelt. Eine Gelenkachse (54) des Schwenkgelenkes (52) ist über eine Steuerrolle (55) entlang einer Führung (56) positionsveränderlich angeordnet. Die Führung (56) erstreckt sich mit einer Längsachse im wesentlichen in einer radialen Richtung hinsichtlich einer Drehachse des Blasrades (25).

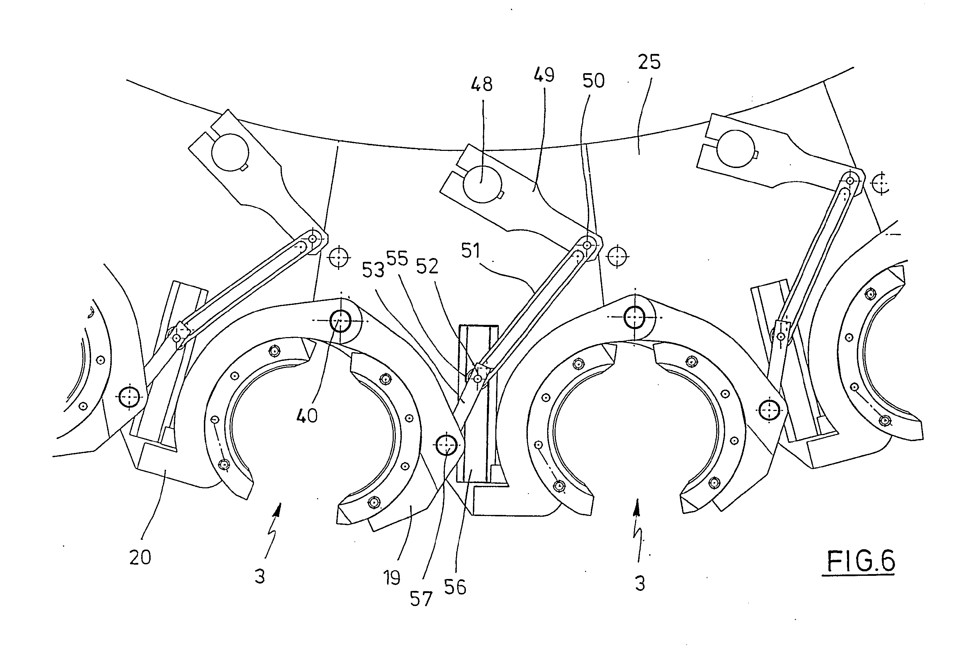

Gemäß dem in Fig. 6 dargestellten Betriebszustand sind die Blasstationen (3) bei einem Vergleich mit der Darstellung in Fig. 5 weiter geschlossen, aber noch zu einem Teil geöffnet. Dies wurde durch eine Verdrehung der Steuerwelle (48) und einer hierdurch hervorgerufenen Positionsveränderung der Hebel (49, 51, 53) erreicht. Aufgrund der durchgeführten Schwenkbewegung des Anlenkhebels (49) wurde die Steuerrolle (55) entlang der Führung (56) in eine hinsichtlich des Umfanges des Blasrades (25) weiter außen liegende Positionierung verschoben.

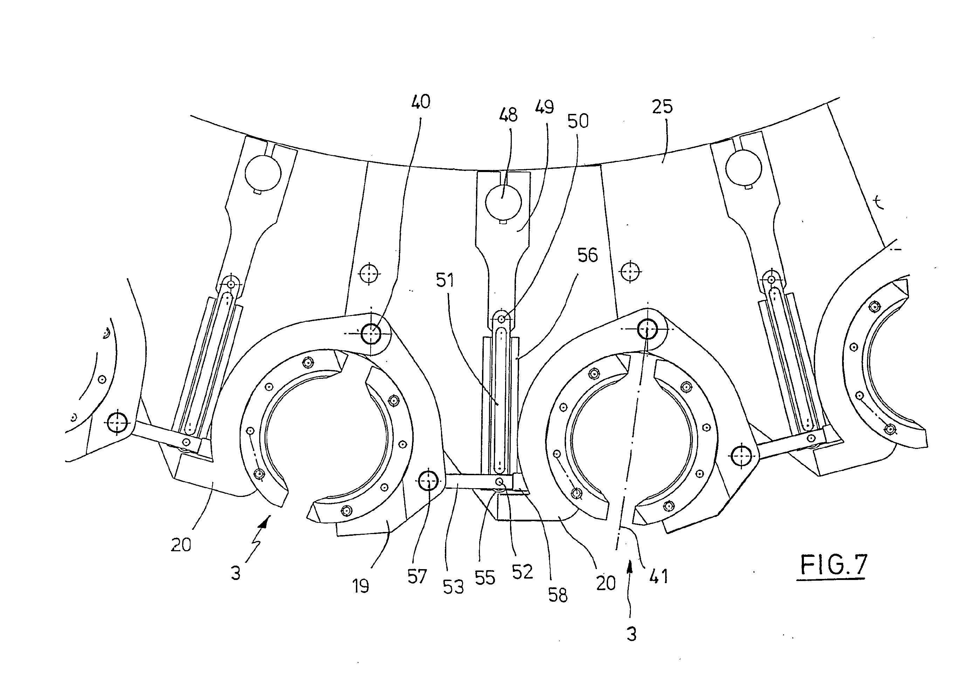

Gemäß dem in Fig. 7 dargestellten Betriebszustand sind die Blasstationen (3) vollständig geschlossen. Die in Fig. 7 zu erkennenden verbleibenden Abstände zwischen den äußeren Formschalen (44, 45) resultieren daraus, daß auch bei der Darstellung in Fig. 7 die inneren Formschalen nicht dargestellt sind. Diese grenzen unmittelbar an die Trennebene (41).

In der geschlossenen Positionierung der Blasstation (3) sind der Anlenkhebel (49) und der Steuerhebel (51) gestreckt hintereinander in einer radialen Richtung des Blasrades (25) angeordnet. Die nicht dargestellte Drehachse des Blasrades (25), die Steuerwelle (48), das Schwenkgelenk (50) und das Schwenkgelenk (52) befinden sich bei dieser Anordnung im wesentlichen auf einer radial orientierten Verbindungsgeraden. Der über ein Schwenkgelenk (57) mit dem Formträger (19) verbundene Stützhebel (53) ist mit seinem dem Schwenkgelenk (57) abgewandten Ende gegen ein Gegenlager (58) geführt und wird von diesem abgestützt. Das Schwenkgelenk (57), das Schwenkgelenk (52) und das Gegenlager (58) sind entlang einer gemeinsamen Verbindungsgeraden angeordnet, die im wesentlichen rechtwinklig zur radialen Richtung des Blasrades (25) positioniert ist.

Das Gegenlager (58) kann entweder als separates starr mit dem Blasrad (25) verbundenes Bauelement oder als integrales Bauteil des Formträgers (20) ausgebildet sein. Bei einer Innendruckbeaufschlagung der Blasstation (3) während der Durchführung einer Blasverformung wird die vom Stützhebel (53) übertragene Kraft im wesentlichen vollständig in das Gegenlager (58) eingeleitet und führt nicht zu einer Kraftbeaufschlagung des Anlenkhebels (49) und des Steuerhebels (51). Insbesondere ist es bei der in Fig. 7 dargestellten Positionierung der Hebel (49, 51, 53) möglich, ohne zusätzliche Kraftbelastung der Steuerwelle (48) eine Verspannung der Formträger (19, 20) einer jeweiligen Blasstation (3) bzw. der zugeordneten Blasformsegmente relativ zueinander durchzuführen. Es wird somit keine zusätzliche Verriegelung der Blasstationen (3) benötigt.

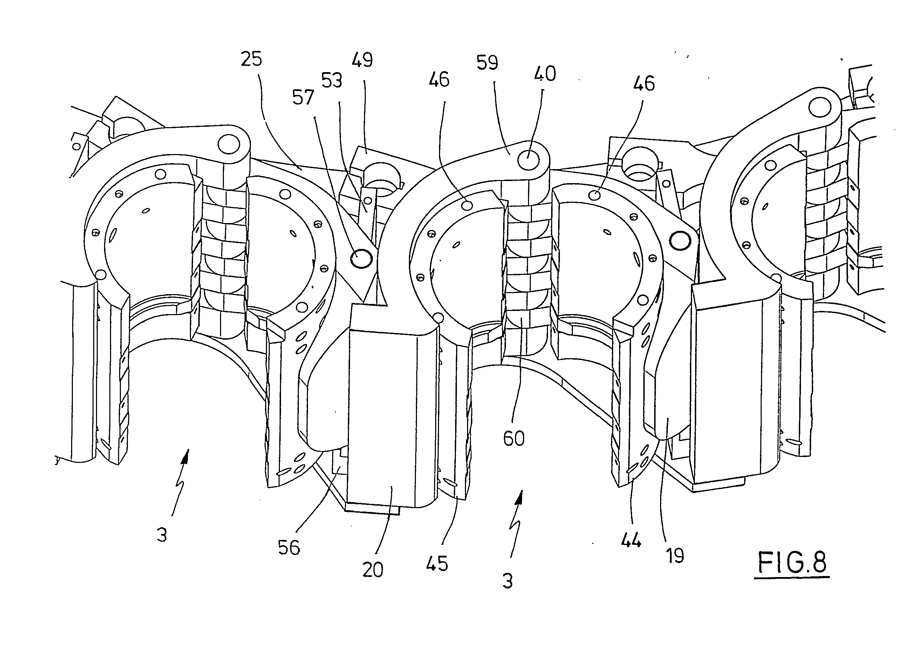

Fig. 8 zeigt eine perspektivische Darstellung der Blasstationen (3) in der vollständig geöffneten Positionierung gemäß der Anordnung in Fig. 5. Es ist hier insbesondere zu erkennen, daß die Drehachse (40) der Blasstation (3) von ösenartig vorstehenden Vorsprüngen (59) des feststehenden Formträgers (20) gehaltert ist. Die Vorsprünge sind mit Ausnehmungen versehen, die die Drehachse (40) lagerartig aufnehmen. Die Vorsprünge (59) des feststehenden Formträgers (20) überdecken sich kammartig mit Vorsprüngen (60) des beweglichen Formträgers (19), die ebenfalls mit Ausnehmungen auf der Drehachse (40) geführt sind.

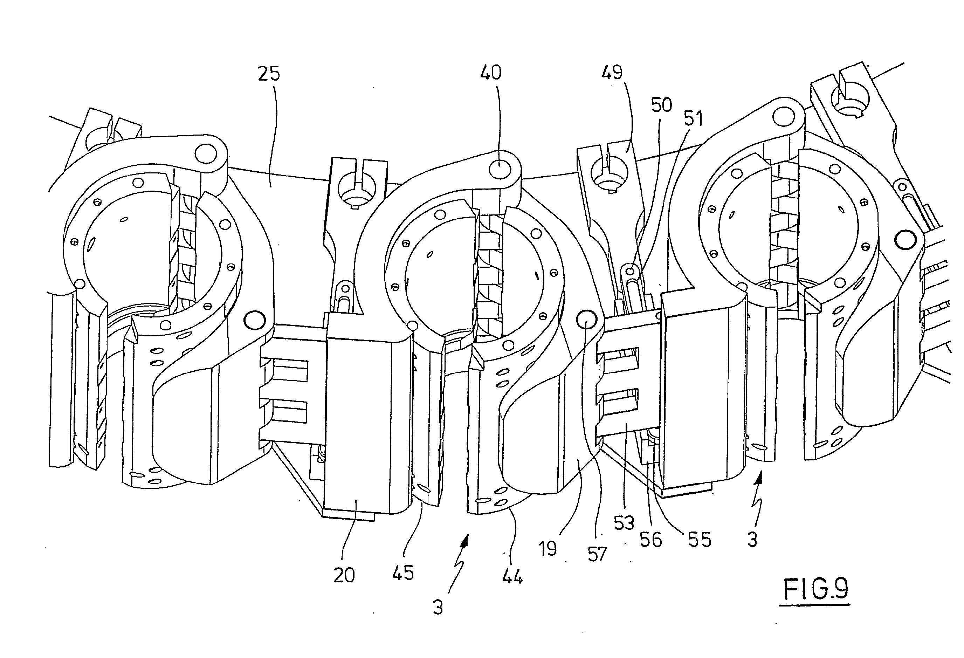

Fig. 9 zeigt eine perspektivische Ansicht der Blasstation (3) entsprechend Fig. 8 in einer geschlossenen Positionierung der Blasstation (3) gemäß Fig. 7. Es ist hierbei insbesondere noch einmal die Ausrichtung der Hebel (49, 51, 53) in der geschlossenen Positionierung der Blasstation (3) sowie die relativ zur radialen Richtung des Blasrades (25) mit ihrer jeweiligen Trennebene (41) schräge Anordnung der Blasstationen (3) zu erkennen.

Im Bereich mindestens eines der Formträger (20, 19) bzw. einer der äußeren Formschalen (44, 45) wird ein Druckbereich zur Ermöglichung einer Verspannung von Blasformsegmenten angeordnet. Insbesondere ist daran gedacht, den Druckbereich im Bereich einer den Formträgern (19, 20) abgewandten Seite der äußeren Formschalen (44, 45) zu positionieren. Insbesondere erweist es sich hinsichtlich der erforderlichen Anschlußleitungen als vorteilhaft, den Druckbereich im Bereich des stationären Formträgers (20) bzw. der stationären äußeren Formschale (45) zu positionieren. Der Druckbereich kann durch eine elastomere Dichtung begrenzt werden. Typischerweise erfolgt eine Beaufschlagung des Druckbereiches mit Druckluft, um die erforderliche Verspannung der Blasformsegmente hervorzurufen und die Verspannung ist mindestens so groß, wie die durch die Blasdruckeinleitung generierten Kräfte, die zu einer ungewollten teilweisen Öffnung der Blasstation (3) bei der Durchführung des Blasvorganges führen könnten.

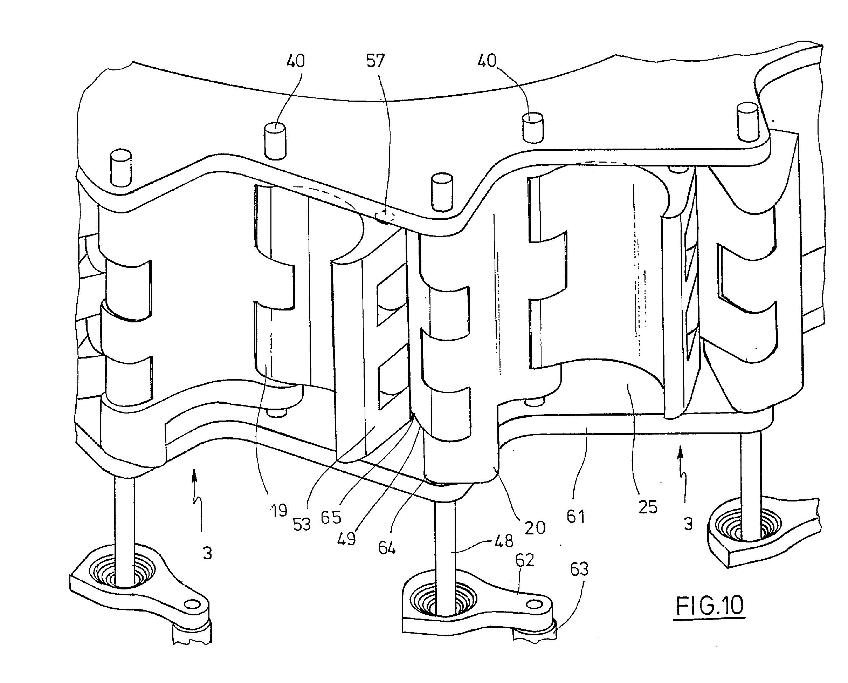

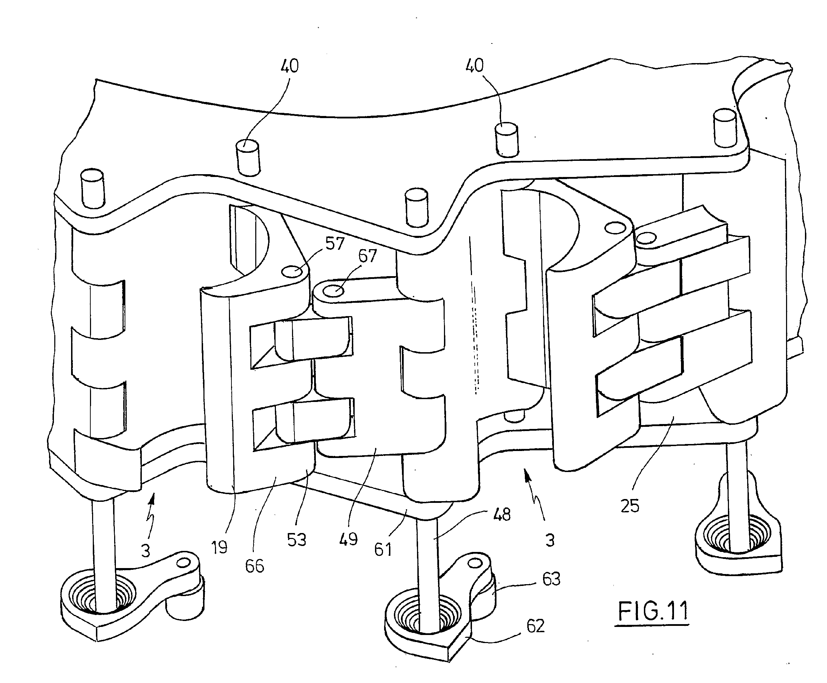

Gemäß der Ausführungsform in Fig. 10 ist eine Konstruktionsvariante vorgesehen, bei der die Steuerwelle (48) in der Nähe eines Außenumfanges (61) des Blasrades (25) angeordnet ist. Die Steuerwelle (48) ist über einen Positionierhebel (62) mit einer Steuerrolle (63) derart verbunden, daß bei einer Führung der Steuerrolle (63) entlang einer Kurvenbahn Positionierbewegungen der Steuerrolle (63) über den Positionierhebel (62) in Schwenkbewegungen der Steuerwelle (48) transformiert werden. Beim Ausführungsbeispiel gemäß Fig. 11 ist die Steuerwelle (48) im feststehenden Formträger (20) geführt. Der Formträger (20) weist hierzu Vorsprünge (64) auf, die Lagerbohrungen für die Steuerwelle (48) bereitstellen. Die Vorsprünge (64) überdecken kammartig Vorsprünge (65) des Anlenkhebels (49), die unbeweglich mit der Steuerwelle (48) verbunden sind. Eine Drehbewegung der Steuerwelle (48) wird hierdurch in einer Schwenkbewegung des Anlenkhebels (49) umgesetzt. Der Anlenkhebel (49) ist über einen Stützhebel (53) mit dem Schwenkgelenk (57) des beweglichen Formträgers (19) verbunden.

Die Anordnung des Anlenkhebels (49) sowie des Stützhebels (53) ist in der Darstellung gemäß Fig. 11, die eine weiter geschlossene Positionierung der Blasstation (3) zeigt, in weiteren Einzelheiten zu erkennen. Der bewegliche Formträger (19) ist gemäß der dargestellten Positionierung bereits soweit um die Drehachse (40) verschwenkt, daß fast die geschlossene Positionierung der Blasstation (3) eingenommen wird. Der Stützhebel (53) greift zwischen Vorsprünge (66) des beweglichen Formträgers (19) ein, die das wellenartige Schwenkgelenk (57) haltern.

In einer vollständig geschlossenen Positionierung der Blasstationen (3) gemäß der Ausführungsform in Fig. 10 und Fig. 11 sind das Schwenkgelenk (57), ein den Stützhebel (53) mit dem Anlenkhebel (49) verbindendes Schwenkgelenk (67) sowie die Steuerwelle (48) entlang einer gemeinsamen geraden Verbindungslinie angeordnet, so daß bei einer Innendruckbelastung der Blasstation (3) eine Abstützung ohne Einleitung von Drehmomenten in die Steuerwelle (48) sichergestellt ist.

Die Ausführungsform gemäß Fig. 10 und Fig. 11 weist gegenüber den zuvor beschriebenen Ausführungsformen den Vorteil auf, daß ein vereinfachter mechanischer Aufbau vorliegt. Dieser Vorteil führt aber zu dem Nebeneffekt, daß eine stärkere Verlagerung der resultierenden Massen in Richtung auf den Außenumfang (61) des Blasrades (25) erfolgt und daß hierdurch höhere Trägheitsmomente bei einem Beschleunigen sowie einem Abbremsen hervorgerufen werden. Die konkrete Ausführungsform wird deshalb in Abhängigkeit von einer vorgesehenen Umdrehungszahl des Blasrades (25) sowie von einem Durchmesser des Blasrades (25) in Abhängigkeit von der Anzahl der zu installierenden Blasstationen (3) gewählt.

Alle vorstehend erläuterten Ausführungsformen können sowohl für eine blastechnische Verformung der Vorformlinge in die Behälter (2) mit ihren Mündungsabschnitten (21) in lot-rechter Richtung nach oben orientiert als auch mit ihren Mündungsabschnitten (21) in lotrechter Richtung nach unten orientiert verwendet werden. Ebenfalls können die erläuterten erfindungsgemäßen Varianten mit allen erläuterten Heizeinrichtungen für die Vorformlinge (1) kombiniert werden.

Gemäß einer Abwandlung der Ausführungsform in Fig. 10 und Fig. 11 wird die Steuerwelle (48) mit einem größeren Abstand zum Außenumfang (61) des Blasrades (25) angeordnet, beispielsweise auf der Hälfte des Abstandes zwischen der Drehachse (40) sowie der in Fig. 10 und Fig. 11 eingezeichneten Positionierung der Steuerwelle (48). Die Formträger (19, 20) werden hierdurch in einem mittleren Bereich ihrer radialen Ausdehnung abgestützt. Diese Variante führt zu einer günstigeren Massenverteilung auf dem Blasrad (25).

## Patentansprüche

1. Verfahren zur Blasformung von Behältern (2), bei dem spritzgegossene Vorformlinge (1) aus einem thermoplastischen Material im Bereich einer Heizstrecke (24) erwärmt und anschließen an eine Blaseinrichtung übergeben werden, in der die Vorformlinge (1) durch Einwirkung eines Blasdruckes innerhalb von Blasformen (4), die aus mindestens zwei Blasformsegmenten bestehen, zu den Behältern (2) umgeformt werden und bei dem die Vorformlinge (1) gemeinsam mit den Blasformen (4) mindestens entlang eines Teiles eines Umlaufweges eines rotierenden Blasrades (25) transportiert werden sowie bei dem die Blasformsegmente während mindestens eines Teiles des Blasformungsprozesses relativ zueinander verspannt werden und bei dem mindestens eines der Blasformsegmente um eine Drehachse (40) herum zur Durchführung von Öffnungs- und Schließbewegungen verschwenkt wird, sowie bei dem mindestens eines der Blasformsegmente nach einem Schließen einer die Blasformsegmente halternden Blasstation (3) beabstandet zur Drehachse (40) und unabhängig vom anderen Blasformsegment gegenüber einem fest mit dem Blasrad (25) verbundenen Gegenlager (58) abgestützt und mindestens zeitweise sowohl gegenüber dem Gegenlager (58) als auch gegenüber dem anderen Blasformsegment verspannt wird, **dadurch gekennzeichnet, dass** mindestens ein Blasformsegment um eine vertikale Drehachse (40) verschwenkt wird- und dass die Blasformsegmente in einer geschlossenen Positionierung der Blasstation mit einer Trennebene (41) schräg zu einer radialen Bezugsebene (42) des Blasrades (25) angeordnet werden.

2. Verfahren nach Anspruch 1, **dadurch gekennzeichnet, dass** eines der Blasformsegmente unbeweglich mit dem Blasrad (25) verbunden wird.

3. Verfahren nach einem der Ansprüche 1 oder 2, **dadurch gekennzeichnet, dass** die Verspannung der Blasformsegmente relativ zueinander durch eine pneumatische Verspannung bereitgestellt wird.

4. Verfahren nach einem der Ansprüche 1 bis 3, **dadurch gekennzeichnet, dass** die Positionierung mindestens eines der Blasformsegmente unter Verwendung eines Gelenkhebels durchgeführt wird.

5. Verfahren nach einem der Ansprüche 1 bis 4, **dadurch gekennzeichnet, dass** eine Verspannung der Blasformsegmente relativ zueinander durch mindestens einen Keil durchgeführt wird.

6. Verfahren nach einem der Ansprüche 1 bis 5, **dadurch gekennzeichnet, dass** das Gegenlager (58) als separates Bauteil im Bereich des Blasrades (25) angeordnet wird.

7. Verfahren nach einem der Ansprüche 1 bis 5, **dadurch gekennzeichnet, dass** das Gegenlager (58) als gemeinsames Bauteil mit einem Teil einer zur abzustützenden Blasstation (3) benachbarten Blasstation (3) gefertigt wird.

8. Verfahren nach einem der Ansprüche 1 bis 7, **dadurch gekennzeichnet, dass** die Vorformlinge (1) mit ihren Mündungen in lotrechter Richtung nach oben orientiert zu den Behältern (2) umgeformt werden.

9. Verfahren nach einem der Ansprüche 1 bis 7, **dadurch gekennzeichnet, dass** die Vorformlinge (1) mit ihren Mündungen in lotrechter Richtung nach unten orientiert zu den Behältern (2) umgeformt werden.

10. Vorrichtung zur Blasformung von Behältern (2), die eine Heizstrecke (24) zur Erwärmung von spritzgegossenen Vorformlingen (1) aus einem thermoplastischen Material aufweist und die mit einer Blaseinrichtung versehen ist, die mindestens eine auf einem Blasrad (25) angeordnete Blasstation (3) zur Umformung der Vorformlinge (1) in die Behälter (2) aufweist, sowie bei der die Blasstation (3) mit Formträgern (19, 20) versehen ist, die jeweils Blasformsegmente haltern und bei der ein erster Formträger relativ zu einem zweiten Formträger um eine Drehachse (40) herum beweglich angeordnet ist, und bei der mindestens einer der Formträger (19, 20) in einer geschlossenen Positionierung der Blasstation (3) unabhängig vom anderen Formträger (19, 20) und mit einem Abstand zu einer Drehachse (40) der Blasstation (3) gegenüber einem fest mit dem Blasrad (25) verbundenen Gegenlager (58) abgestützt angeordnet ist und der gegenüber dem Gegenlager (58) abgestützte Formträger (19, 20) mindestens zeitweise sowohl gegenüber dem Gegenlager (58) als auch gegenüber dem weiteren Formträger (19, 20) verspannbar positioniert ist, **dadurch gekennzeichnet, dass** die Blasstation (3) mit einer Trennebene (41) der Blasformsegmente in einer geschlossenen Positionierung der Blasstation derart angeordnet ist, dass die Trennebene (41) schräg zu einer radialen Bezugsebene (42) des Blasrades (25) positioniert ist und dass die Drehachse (40) im wesentlichen vertikal angeordnet ist.

11. Vorrichtung zur Blasformung von Behältern (2), die eine Heizstrecke (24) zur Erwärmung von spritzgegossenen Vorformlingen (1) aus einem thermoplastischen Material aufweist und die mit einer Blaseinrichtung versehen ist, die mindestens eine auf einem Blasrad (25) angeordnete Blasstation (3) zur Umformung der Vorformlinge (1) in die Behälter (2) aufweist, sowie bei der die Blasstation (3) mit Formträgern (19, 20) versehen ist, die jeweils Blasformsegmente haltern und bei der ein erster Formträger (19) relativ zu einem zweiten Formträger (20) um eine Drehachse (40) herum beweglich angeordnet ist, sowie bei der der zweite Formträger (20) unbeweglich mit dem Blasrad (25) verbunden ist, **dadurch gekennzeichnet, dass** die Blasstation (3) mit einer Trennebene (41) der Blasformsegmente in einer geschlossenen Positionierung der Blasstation derart angeordnet ist, dass die Trennebene (41) schräg zu einer radialen Bezugsebene (42) des Blasrades (25) positioniert ist und dass die Drehachse (40) im wesentlichen vertikal angeordnet ist.

12. Vorrichtung nach einem der Ansprüche 10 oder 11, **dadurch gekennzeichnet, dass** der fest mit dem Blasrad (25) verbundene Formträger (20) schräg zur radialen Bezugsebene (42) angeordnet ist.

13. Vorrichtung nach einem der Ansprüche 10 bis 12, **dadurch gekennzeichnet, dass** ein Neigungswinkel (43) zwischen der Trennebene (41) und der radialen Bezugsebene (42) ein Wertintervall zwischen 0° Grad und 45° Grad aufweist.

14. Vorrichtung nach einem der Ansprüche 10 bis 13, wobei die Vorrichtung ein fest mit dem Blasrad (25) verbundenes Gegenlager (58) aufweist, **dadurch gekennzeichnet, dass** eine Abstützeinrichtung zur Abstützung des beweglichen Formträgers (19) gegenüber dem Gegenlager (58) als Teil eines Gelenkhebels ausgebildet ist.

15. Vorrichtung nach einem der Ansprüche 10 bis 13, wobei die Vorrichtung ein fest mit dem Blasrad (25) verbundenes Gegenlager (58) aufweist, **dadurch gekennzeichnet, dass** eine Abstützeinrichtung zur Abstützung des beweglichen Formträgers (19) gegenüber dem Gegenlager (58) keilförmig ausgebildet ist.

16. Vorrichtung nach einem der Ansprüche 10 bis 15, wobei die Vorrichtung ein fest mit dem Blasrad (25) verbundenes Gegenlager (58) aufweist,, **dadurch gekennzeichnet, dass** das Gegenlager (58) als ein eigenständiges Bauelement ausgebildet ist.

17. Vorrichtung nach einem der Ansprüche 10 bis 15, wobei die Vorrichtung ein fest mit dem Blasrad (25) verbundenes Gegenlager (58) aufweist, **dadurch gekennzeichnet, dass** das Gegenlager (58) als Teil einer zur abzustützenden Blasstation (3) benachbarten Blasstation (3) ausgebildet ist.

18. Vorrichtung nach einem der Ansprüche 10 bis 17, **dadurch gekennzeichnet, dass** die Blasstation (3) zur Aufnahme von mit ihren Mündungsabschnitten (21) in lotrechter Richtung nach oben orientierten Vorformlingen (1) ausgebildet ist.

19. Vorrichtung nach einem der Ansprüche 10 bis 17, **dadurch gekennzeichnet, dass** die Blasstation (3) zur Aufnahme von mit ihren Mündungsabschnitten (21) in lotrechter Richtung nach unten orientierten Vorformlingen (1) ausgebildet ist.

20. Vorrichtung nach einem der Ansprüche 10 bis 19, **dadurch gekennzeichnet, dass** entlang eines Außenumfanges (61) des Blasrades (25) abwechselnd fest mit dem Blasrad (25) verbundenen Formträger (20) sowie relativ zum Blasrad (25) beweglich angeordnete Formträger (19) positioniert sind.

21. Vorrichtung nach einem der Ansprüche 10 bis 19, **dadurch gekennzeichnet, dass** entlang des Außenumfanges (61) des Blasrades (25) jeweils paarweise fest mit dem Blasrad (25) verbundene Formträger (20) sowie verschwenkbar relativ zum Blasrad geführte Formträger (19) einander benachbarter Blasstationen, (3) angeordnet sind.

22. Vorrichtung nach Anspruch 21, **dadurch gekennzeichnet, dass** mindestens zwei benachbarte Blasstationen einen gemeinsamen fest mit dem Blasrad (25) verbundenen Formträger (20) aufweisen.

## Claims

1. A method for the blow moulding of containers (2) wherein injection-moulded preforms (1) made of a thermoplastic material are heated in the area of a heating section (24) and are subsequently delivered to a blowing device in which the preforms (1) are moulded in blow moulds (4) by the action of blowing pressure to form the containers (2), said blow moulds (4) consisting of at least two blow mould segments, and wherein, together with the blow moulds (4), the preforms (1) are transported at least along a part of a circulation path of a rotating blow moulding wheel (25), and wherein the blow mould segments are braced in relation to each other during at least a part of the blow moulding process and wherein at least one of the blow mould segments is pivoted around a rotational axis (40) for making opening and closing movements, and wherein, after a blowing station (3) holding the blow mould segments has been closed, at least one of the blow mould segments is - independently of the other blow mould segment - supported against a counter bearing (58) that is permanently connected to the blow moulding wheel (25), the at least one of the blow mould segments being spaced apart from the rotational axis (40) and being braced against both the counter bearing (58) and the other blow mould segment at least at times,
**characterised in that**
- at least one blow mould segment is pivoted around a vertical rotational axis (40) and that, while the blowing station is in a closed position, the blow mould segments are arranged at an angle to a radial reference plane (42) of the blow mould wheel (25) by means of a separation plane.

2. The method according to Claim 1, **characterised in that** one of the blow mould segments is connected to the blow mould wheel (25) in an immobile manner.

3. The method according to any one of Claims 1 or 2, **characterised in that** the bracing of the blow mould segments in relation to each other is provided by a pneumatic bracing.

4. The method according to any one of Claims 1 to 3, **characterised in that** the positioning of at least one of the blow mould segments is achieved by means of an articulated lever.

5. The method according to any one of Claims 1 to 4, **characterised in that** a bracing of the blow mould segments in relation to each other is achieved by means of at least one wedge.

6. The method according to any one of Claims 1 to 5, **characterised in that** the counter bearing (58) is arranged in the vicinity of the blow mould wheel (25) as a separate component.

7. The method according to any one of Claims 1 to 5, **characterised in that** the counter bearing (58) is manufactured as a common component together with a part of a blowing station (3) neighbouring the blowing station (3) to be supported.

8. The method according to any one of Claims 1 to 7, **characterised in that** the preforms (1) are moulded to form the containers (2) with their outlets facing up in vertical direction.

9. The method according to any one of Claims 1 to 7, **characterised in that** the preforms (1) are moulded to the form the containers (2) with their outlets facing down in vertical direction.

10. A device for the blow moulding of containers (2), the device including a heating section (24) for heating injection-moulded preforms (1) that are made of a thermoplastic material and being provided with a blowing device which includes at least one blowing station (3) arranged on a blow moulding wheel (25) and intended for moulding the preforms (1) to form the containers (2) and wherein the blowing station (3) is provided with mould carriers (19, 20) which each hold blow mould segments and wherein a first mould carrier is arranged such that it is movable around a rotational axis (40) in relation to a second mould carrier and wherein, in a closed position of the blowing station (3), at least one of the mould carriers (19, 20) is - independently of the other mould carrier (19, 20) - arranged such that it is supported against a counter bearing (58) that is permanently connected to the blow moulding wheel (25), the at least one of the blow mould segments being spaced apart from the rotational axis (40) of the blowing station (3), and wherein the mould carrier (19, 20) that is supported against the counter bearing (58) is positioned such that it can be braced both against the counter bearing (58) and against the other mould carrier (19, 20) at least at times, **characterised in that**, in a closed position of the blowing station, the blowing station (3) is arranged with a separation plane (41) of the blow mould segments such that the separation plane (41) is positioned at an angle to a radial reference plane (42) of the blow mould wheel (25) and that, in essence, the rotational axis (40) is arranged vertically.

11. A device for the blow moulding of containers (2), the device including a heating section (24) for heating injection-moulded preforms (1) that are made of a thermoplastic material and that is provided with a blowing device which includes at least one blowing station (3) arranged on a blow moulding wheel (25) and intended for moulding the preforms (1) to form the containers (2) and wherein the blowing station (3) is provided with mould carriers (19, 20) which each hold blow mould segments and wherein a first mould carrier (19) is arranged such that it is movable around a rotational axis (40) in relation to a second mould carrier (20) and wherein the second mould carrier (20) is connected to the blow mould wheel (25) in an immobile manner, **characterised in that**, in a closed position of the blowing station, the blowing station (3) is arranged with a separation plane (41) of the blow mould segments such that the separation plane (41) is positioned at an angle to a radial reference plane (42) of the blow mould wheel (25) and that, in essence, the rotational axis (40) is arranged vertically.

12. The device according to any one of Claims 10 or 11, **characterised in that** the mould carrier (20) that is permanently connected to the blow mould wheel (25) is arranged at an angle to the radial reference plane (42).

13. The device according to any one of Claims 10 to 12, **characterised in that** the angle of inclination (43) between the separation plane (41) and the radial reference plane (42) has a value interval ranging from 0 degrees to 45 degrees.

14. The device according to any one of Claims 10 to 13, wherein the device includes a counter bearing (58) that is permanently connected to the blow mould wheel (25), **characterised in that** a supporting device provided to support the mobile mould carrier (19) against the counter bearing (58) is formed as a part of an articulated lever.

15. The device according to any one of Claims 10 to 13, wherein the device includes a counter bearing (58) that is permanently connected to the blow mould wheel (25), **characterised in that** a supporting device provided to support the mobile mould carrier (19) against the counter bearing (58) is formed like a wedge.

16. The device according to any one of Claims 10 to 15, wherein the device includes a counter bearing (58) that is permanently connected to the blow mould wheel (25), **characterised in that** the counter bearing (58) is formed as an independent component.

17. The device according to any one of Claims 10 to 15, wherein the device includes a counter bearing (58) that is permanently connected to the blow mould wheel (25), **characterised in that** the counter bearing (58) is formed as a part of a blowing station (3) neighbouring the blowing station (3) to be supported.

18. The device according to any one of Claims 10 to 17, **characterised in that** the blowing station (3) is formed to receive preforms (1) that have their outlet sections (21) facing up in vertical direction.

19. The device according to any one of Claims 10 to 17, **characterised in that** the blowing station (3) is formed to receive preforms (1) that have their outlet sections (21) facing down in vertical direction.

20. The device according to any one of Claims 10 to 19, **characterised in that**, along an outer circumference (61) of the blow mould wheel (25), mould carriers (20) that are permanently connected to the blow mould wheel (25) and mould carriers (19) that are arranged in relation to the blow mould wheel (25) in a mobile manner are alternately positioned.

21. The device according to any one of Claims 10 to 19, **characterised in that**, along the outer circumference (61) of the blow mould wheel (25), mould carriers (20) that are permanently connected to the blow mould wheel (25) as well as mould carriers (19) of neighbouring blowing stations (3) are each arranged in pairs along the outer circumference (61) of the blow mould wheel (25), said mould carriers (19) being guided in relation to the blow mould wheel in a pivoting manner.

22. The device according to Claim 21, **characterised in that** at least two neighbouring blowing stations include a common mould carrier (20) that is permanently connected to the blow mould wheel (25).

## Revendications

1. Procédé de moulage par soufflage de récipients (2) dans le cadre duquel des préformes (1) en un matériau thermoplastique moulées par injection sont chauffées dans une zone de chauffage (24) puis remises à un dispositif de soufflage dans lequel les préformes (1) sont transformées en récipients (2) sous l'action d'une pression de soufflage à l'intérieur de moules de soufflage (4) composés d'au moins deux segments de moule, et dans le cadre duquel les préformes et les moules de soufflage (4) sont transportés ensemble le long d'une partie au moins de la révolution d'une roue de soufflage (25) en rotation, et dans le cadre duquel les segments de moule de soufflage sont, pendant une partie au moins du processus de soufflage, serrés l'un par rapport à l'autre et dans le cadre duquel l'un au moins des segments de moule de soufflage est pivoté autour d'un axe de rotation (40) pour réaliser des mouvements d'ouverture et de fermeture, et dans le cadre duquel, après la fermeture d'une station de soufflage (3) qui maintient les segments de moule, l'un au moins des segments de moule de soufflage est, à une certaine distance de l'axe de rotation (40) et indépendamment de l'autre segment de moule, maintenu par rapport à un palier-support (58) faisant corps avec la roue de soufflage (25) et, temporairement au moins, serré aussi bien par rapport au palier-support (58) que par rapport à l'autre segment de moule de soufflage, **caractérisé en ce qu'**un segment de moule de soufflage au moins est pivoté autour d'un axe de rotation (40) vertical et que, en en positionnement fermé de la station de soufflage, l'agencement des segments de moule de soufflage est tel qu'un plan de joint (41) est oblique par rapport à un plan de référence (42) radial de la roue de soufflage (25).

2. Procédé selon la revendication 1, **caractérisé en ce que** l'un des segments de moule de soufflage est fixé à la roue de soufflage (25) de façon à être immobile par rapport à celle-ci.

3. Procédé selon l'une des revendications 1 ou 2, **caractérisé en ce que** le serrage des segments de moule de soufflage l'un vers l'autre est assuré par un serrage pneumatique.

4. Procédé selon l'une des revendications 1 à 3, **caractérisé en ce que** le positionnement de l'un au moins des segments de moule de soufflage est réalisé en utilisant un levier articulé.

5. Procédé selon l'une des revendications 1 à 4, **caractérisé en ce qu'**un serrage des segments de moule de soufflage l'un vers l'autre est assuré par au moins une cale.

6. Procédé selon l'une des revendications 1 à 5, **caractérisé en ce que** le palier-support (58) est disposé comme pièce séparée dans la zone de la roue de soufflage (25).

7. Procédé selon l'une des revendications 1 à 5, **caractérisé en ce que** le palier-support (58) est réalisé sous forme d'élément de construction commun à une pièce d'une station de soufflage (3) voisine de la station de soufflage (3) à maintenir.

8. Procédé selon l'une des revendications 1 à 7, **caractérisé en ce que** l'embouchure des préformes (1) est tournée verticalement vers le haut lorsqu'elles sont transformées en récipients (2).

9. Procédé selon l'une des revendications 1 à 7, **caractérisé en ce que** l'embouchure des préformes (1) est tournée verticalement vers le bas lorsqu'elles sont transformées en récipients (2).

10. Dispositif de moulage par soufflage de récipients (2) présentant une zone de chauffage (24) pour le réchauffement de préformes (1) en un matériau thermoplastique moulées par injection et muni d'un dispositif de soufflage présentant au moins une station de soufflage (3) agencée sur une roue de soufflage (25) pour la transformation des préformes (1) en récipients (2), et dont la station de soufflage (3) est munie de supports de moule (19, 20) qui maintiennent respectivement des segments de moule de soufflage, et dont un premier support de moule est agencé de façon à pouvoir pivoter par rapport à un second support de moule autour d'un axe de rotation (40), et dont l'un au moins des supports de moule (19, 20), en un positionnement fermé de la station de soufflage (3), est, indépendamment de l'autre support de moule (19,20) et à une certaine distance de l'axe de rotation (40) de la station de soufflage (3), agencé de façon à être maintenu par rapport à un palier-support (58) faisant corps avec la roue de soufflage (25), le support de moule (19, 20) maintenu par rapport au palier-support (58) étant, temporairement au moins, positionné de façon à pouvoir être serré aussi bien par rapport au palier-support (58) que par rapport à l'autre support de moule (19, 20), **caractérisé en ce que** la station de soufflage (3) est agencée de façon telle qu'un plan de joint (41) des segments de moule de soufflage en positionnement fermé de la station de soufflage est oblique par rapport à un plan de référence (42) radial de la roue de soufflage (25) et que l'axe de rotation (40) est orienté de façon essentiellement verticale.

11. Dispositif de moulage par soufflage de récipients (2) présentant une zone de chauffage (24) pour le réchauffement de préformes (1) en un matériau thermoplastique moulées par injection et muni d'un dispositif de soufflage présentant au moins une station de soufflage (3) agencée sur une roue de soufflage (25) pour la transformation des préformes (1) en récipients (2), et dont la station de soufflage (3) est munie de supports de moule (19, 20) qui maintiennent respectivement des segments de moule de soufflage, et dont un premier support de moule (19) est agencé de façon à pouvoir pivoter par rapport à un second support de moule (20) autour d'un axe de rotation (40), et dont le second support de moule (20) est fixé à la roue de soufflage (25) de façon à être immobile par rapport à celle-ci, **caractérisé en ce que** la station de soufflage (3) est agencée de façon telle qu'un plan de joint (41) des segments de moule de soufflage en positionnement fermé de la station de soufflage est oblique par rapport à un plan de référence (42) radial de la roue de soufflage (25) et que l'axe de rotation (40) est orienté de façon essentiellement verticale.

12. Dispositif selon l'une des revendications 10 ou 11, **caractérisé en ce que** le support de moule (20) faisant corps avec la roue de soufflage (25) est agencé selon une position oblique par rapport au plan de référence radial (42).

13. Dispositif selon l'une des revendications 10 à 12, **caractérisé en ce qu'**un angle d'inclinaison (43) entre le plan de joint (41) et le plan de référence radial (42) a une valeur comprise entre 0° et 45° degrés.

14. Dispositif selon l'une des revendications 10 à 13, le dispositif présentant un palier-support (58) faisant corps avec la roue de soufflage (25), **caractérisé en ce qu'**un dispositif d'appui destiné à soutenir le support de moule (19) mobile par rapport au palier-support (58) est réalisé sous forme de partie d'un levier articulé.

15. Dispositif selon l'une des revendications 10 à 13, le dispositif présentant un palier-support (58) faisant corps avec la roue de soufflage (25), **caractérisé en ce qu'**un dispositif d'appui destiné à soutenir le support de moule (19) mobile par rapport au palier-support (50) est réalisé en forme de coin.

16. Dispositif selon l'une des revendications 10 à 15, le dispositif présentant un palier-support (58) faisant corps avec la roue de soufflage (25), **caractérisé en ce que** le palier-support (58) est réalisé sous forme d'élément de construction propre.

17. Dispositif selon l'une des revendications 10 à 15, le dispositif présentant un palier-support (58) faisant corps avec la roue de soufflage (25), **caractérisé en ce que** le palier-support (58) est réalisé sous forme de pièce d'une station de soufflage (3) voisine de la station de soufflage (3) à maintenir.

18. Dispositif selon l'une des revendications 10 à 17, **caractérisé en ce que** la station de soufflage (3) est conformée de façon à accueillir des préformes (1) en position telle que leurs sections d'embouchure (21) soient orientées verticalement vers le haut.

19. Dispositif selon l'une des revendications 10 à 17, **caractérisé en ce que** la station de soufflage (3) est conformée de façon à accueillir des préformes (1) en position telle que leurs sections d'embouchure (21) soient orientées verticalement vers le bas.

20. Dispositif selon l'une des revendications 10 à 19, **caractérisé en ce que** le long d'une périphérie (61) de la roue de soufflage (25) sont positionnés en alternance des supports de moule (20) faisant corps avec la roue de soufflage (25) et des supports de moule (19) agencés de façon mobile par rapport à la roue de soufflage (25).

21. Dispositif selon l'une des revendications 10 à 19, **caractérisé en ce que** le long de la périphérie (61) de la roue de soufflage (25) sont agencés par paires des support de moule (20) faisant corps avec la roue de soufflage (25) ainsi que des support de moule (19) de stations de soufflage (3) voisines guidés de façon à pouvoir pivoter par rapport à la roue de soufflage.

22. Dispositif selon la revendication 21, **caractérisé en ce qu'**au moins deux stations de soufflage voisines présentent un support de moule (20) faisant corps avec la roue de soufflage (25).
